(19) Europäisches Patentamt
European Patent Office
Office européen des brevets

(11) **EP 4 746 553 A1**

(12) **EUROPEAN PATENT APPLICATION**
published in accordance with Art. 153(4) EPC

(43) Date of publication:
**20.05.2026 Bulletin 2026/21**

(21) Application number: **24853498.4**

(22) Date of filing: **19.07.2024**

(51) International Patent Classification (IPC):
***H04W 72/0446*** *(2023.01)*

(52) Cooperative Patent Classification (CPC):
**H04W 72/0446; H04W 72/12; H04W 72/231;
H04W 72/50**

(86) International application number:
**PCT/CN2024/106438**

(87) International publication number:
**WO 2025/036086 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311018574**

(71) Applicant: **Huawei Technologies Co., Ltd.
Shenzhen, Guangdong 518129 (CN)**

(72) Inventors:
• **SUN, Huan
Shenzhen, Guangdong 518129 (CN)**
• **LUO, Zhihu
Shenzhen, Guangdong 518129 (CN)**
• **WANG, Yi
Shenzhen, Guangdong 518129 (CN)**

(74) Representative: **Gill Jennings & Every LLP
The Broadgate Tower
20 Primrose Street
London EC2A 2ES (GB)**

(54) **RESOURCE CONFIGURATION METHOD AND APPARATUS**

(57) This application provides a resource configuration method, and relates to the field of communication technologies. The method includes: determining first information, where the first information includes a first CG configuration periodicity, and a maximum transmission periodicity corresponding to the first CG configuration periodicity is longer than 640 ms; and sending the first information to a terminal device. According to the foregoing solutions, a maximum transmission periodicity corresponding to a CG configuration periodicity is longer than 640 ms, so that when a data packet arrival interval is large, according to the resource configuration method provided in embodiments of this application, the CG configuration periodicity can match an actual data transmission periodicity, to save CG configuration resources.

FIG. 2

**Description**

This application claims priority to Chinese Patent Application No. 202311018574.7, filed with the China National Intellectual Property Administration on August 11, 2023 and entitled "RESOURCE CONFIGURATION METHOD AND APPARATUS", which is incorporated herein by reference in its entirety.

**TECHNICAL FIELD**

This application relates to the field of communication technologies, and more specifically, to a resource configuration method and apparatus.

**BACKGROUND**

Some wireless communication systems may support configured grant (configured grant, CG) uplink transmission. To be specific, a terminal device may send uplink transmission on some uplink resources that may be shared with another terminal device, and does not need to specially request to use the resources, or the resource does not need to be specially granted by a network device. CG transmission does not need a dynamic and explicit scheduling grant of the network device. The CG transmission is also sometimes referred to as grant-free (grant-free, GF) transmission.

The CG transmission may be configured by using a radio resource control (radio resource control, RRC) signaling message. The RRC signaling message may include one or more parameters of one or more terminal devices, to preconfigure the CG transmission. The one or more parameters include one or more parameter sets. The CG transmission has a specific periodicity, and the periodicity may be referred to as a CG configuration periodicity. The CG configuration periodicity is represented by a periodicity (periodicity) field in a configured grant configuration (ConfiguredGrantConfig) information element (information element, IE).

Massive machine type communication (massive machine type communication, mMTC) can resolve a problem that conventional mobile communication cannot well support applications of internet of things and vertical industries, and is oriented to scenarios based on low power consumption and massive connectivity. For example, the mMTC may be oriented to application scenarios such as a smart city, environment monitoring, a smart home, and forest fire prevention that aim at sensing and data collection. These application scenarios are characterized by small data packets, low power consumption, massive connectivity, and the like.

In an mMTC scenario, a sporadic service usually exists, and a data packet arrival interval is large. The data packet arrival interval may be far longer than a CG configuration periodicity, causing a waste of CG configuration resources.

Therefore, how to reduce the waste of CG configuration resources is an urgent problem to be resolved.

**SUMMARY**

This application provides a resource configuration method and apparatus, to reduce a waste of configured grant (configured grant, CG) configuration resources.

According to a first aspect, a resource configuration method is provided. The method is applied to a network device. The method includes: determining first information, where the first information includes a first configured grant (configured grant, CG) configuration periodicity, and a maximum transmission periodicity corresponding to the first CG configuration periodicity is longer than 640 milliseconds (ms); and sending the first information to a terminal device.

According to the foregoing solution, a maximum transmission periodicity corresponding to a CG configuration periodicity is longer than 640 ms, so that when a data packet arrival interval is large (for example, the data packet arrival interval is greater than 640 ms), according to the resource configuration method provided in this embodiment of this application, the CG configuration periodicity can match an actual data transmission periodicity, to save CG configuration resources.

With reference to the first aspect, in some implementations of the first aspect, the terminal device is capable of supporting a CG-small data transmission (small data transmission, SDT) service.

It should be understood that the CG-SDT service further includes an extended CG-SDT service, and the extended CG-SDT service is a service whose arrival interval is far greater than 640 ms, for example, a service that arrives at an interval of several minutes or several hours.

The CG-SDT service may be understood as a small data transmission service based on a preconfigured resource. In the resource configuration method provided in this embodiment of this application, the terminal device supports the CG-SDT service, so that power consumption can be reduced, signaling overheads can be reduced, network efficiency can be improved, and a delay can be reduced.

With reference to the first aspect, in some implementations of the first aspect, a time-domain symbol position corresponding to the CG-SDT service is related to the first CG configuration periodicity and a system hyper frame number.

For a sporadic service, an actual data transmission periodicity may be several minutes or even several hours. In the resource configuration method provided in this embodiment of this application, a hyper frame is introduced, so that a longer CG configuration periodicity can be supported. In comparison with a solution in which a time-domain symbol position is determined based only on a quantity of radio frames, a quantity of slots, and a quantity of symbols, in the resource configuration method provided in this embodiment of this application, 1024 radio frames are extended to 1024 hyper frames, and an increase by 1024 times is achieved, so that a CG configuration periodicity can match an hour-level service transmission periodicity. In this way, CG configuration resources are saved, and overheads of the network device are reduced.

With reference to the first aspect, in some implementations of the first aspect, the maximum transmission periodicity corresponding to the first CG configuration periodicity includes any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

According to the foregoing solution, a maximum transmission periodicity corresponding to a CG configuration periodicity is longer than 640 ms, and there are a plurality of choices, so that when a data packet arrival interval is large, the CG configuration periodicity can match a second-level service transmission periodicity, a minute-level service transmission periodicity, or an hour-level service transmission periodicity, to save CG configuration resources.

With reference to the first aspect, in some implementations of the first aspect, the sending the first information to the terminal device includes: sending radio resource control (radio resource control, RRC) signaling, where the RRC signaling carries the first information, the first information includes a periodicity extension field, and the periodicity extension field includes the first CG configuration periodicity.

According to the foregoing solution, the first CG configuration periodicity may be in the periodicity extension field. In this way, when receiving the first information including the periodicity extension field, the terminal device can transmit a data packet based on the first CG configuration periodicity, and the first CG configuration periodicity can match an actual data packet transmission periodicity. In this way, CG configuration resources are saved, and overheads of the network device are reduced.

With reference to the first aspect, in some implementations of the first aspect, the method further includes: sending second information to the terminal device, where the second information includes a second CG configuration periodicity, and the second CG configuration periodicity is shorter than the first CG configuration periodicity.

According to the foregoing solution, the network device may configure different CG configuration periodicities, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

With reference to the first aspect, in some implementations of the first aspect, the first CG configuration periodicity and the second CG configuration periodicity are carried in the RRC signaling, the RRC signaling includes a periodicity field and a periodicity extension field, and the periodicity field includes the second CG configuration periodicity.

According to the foregoing solution, the network device may configure different CG configuration periodicities in the RRC signaling, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

With reference to the first aspect, in some implementations of the first aspect, the periodicity extension field is used by a first-type terminal device to determine a CG configuration periodicity, and the periodicity field is used by a second-type terminal device to determine a CG configuration periodicity.

According to the foregoing solution, according to the resource configuration method provided in this embodiment of this application, different CG configuration periodicities can be configured for a plurality of types of terminal devices. The CG configuration periodicity of the first-type terminal device is longer than the CG configuration periodicity of the second-type terminal device. The first-type terminal device has a lower capability and a larger data packet arrival interval, and the second-type terminal device has a higher capability and a smaller data packet arrival interval. Therefore, a CG configuration periodicity of each type of terminal device can match an actual data transmission periodicity of the type of terminal device. In this way, for the first-type terminal device, CG configuration resources are saved; and for the second-type terminal device, sufficient CG configuration resources are configured, and sending efficiency of uplink data is not reduced.

With reference to the first aspect, in some implementations of the first aspect, an association periodicity corresponding to the first CG configuration periodicity is 1, and at least one synchronization signal block SSB index in the association periodicity is mapped to a valid transmission occasion.

With reference to the first aspect, in some implementations of the first aspect, the determining the first information includes: determining the first CG configuration periodicity based on load of the network device.

According to the foregoing solution, the network device may determine the CG configuration periodicity based on a load condition. For example, a longer CG configuration periodicity is determined when the load of the network device is higher, and a shorter CG configuration periodicity is determined when the load of the network device is lower, to improve network utilization and reduce a failure rate of a communication system.

According to a second aspect, a resource configuration method is provided. The method is applied to a terminal device. The method includes: receiving first information from a network device, where the first information includes a first configured grant CG configuration periodicity, and a maximum transmission periodicity corresponding to the first CG configuration periodicity is longer than 640 ms; and sending a data packet to the network device based on the first information.

According to the foregoing solution, a maximum transmission periodicity corresponding to a CG configuration periodicity is longer than 640 ms, so that when a data packet arrival interval is large (for example, the data packet arrival interval is greater than 640 ms), according to the resource configuration method provided in this embodiment of this application, the CG configuration periodicity can match an actual data transmission periodicity, to save CG configuration resources.

With reference to the second aspect, in some implementations of the second aspect, the sending the data packet to the network device based on the first information includes: sending a data packet of a CG-small data transmission (small data transmission, SDT) service to the network device based on the first information.

It should be understood that the CG-SDT service further includes an extended CG-SDT service, and the extended CG-SDT service is a service whose arrival interval is far greater than 640 ms, for example, a service that arrives at an interval of several minutes or several hours.

The CG-SDT service may be understood as a small data transmission service based on a preconfigured resource. In the resource configuration method provided in this embodiment of this application, the terminal device supports the CG-SDT service, so that power consumption can be reduced, signaling overheads can be reduced, network efficiency can be improved, and a delay can be reduced.

With reference to the second aspect, in some implementations of the second aspect, the sending the data packet of the CG-SDT service to the network device based on the first information includes: determining, based on the first CG configuration periodicity and a system hyper frame number, a time-domain symbol position corresponding to the data packet of the CG-SDT service; and sending the data packet of the CG-SDT service to the network device based on the time-domain symbol position.

For a sporadic service, an actual data transmission periodicity may be several minutes or even several hours. In the resource configuration method provided in this embodiment of this application, a hyper frame is introduced, so that a longer CG configuration periodicity can be supported. In comparison with a solution in which a time-domain symbol position is determined based only on a quantity of radio frames, a quantity of slots, and a quantity of symbols, in the resource configuration method provided in this embodiment of this application, 1024 radio frames are extended to 1024 hyper frames, and an increase by 1024 times is achieved, so that a CG configuration periodicity can match an hour-level service transmission periodicity. In this way, CG configuration resources are saved, and overheads of the network device are reduced.

With reference to the second aspect, in some implementations of the second aspect, the maximum transmission periodicity corresponding to the first CG configuration periodicity includes any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

According to the foregoing solution, a maximum transmission periodicity corresponding to a CG configuration periodicity is longer than 640 ms, and there are a plurality of choices, so that when a data packet arrival interval is large, the CG configuration periodicity can match a second-level service transmission periodicity, a minute-level service transmission periodicity, or an hour-level service transmission periodicity, to save CG configuration resources.

With reference to the second aspect, in some implementations of the second aspect, the receiving the first information from the network device includes: receiving radio resource control (radio resource control, RRC) signaling, where the RRC signaling carries the first information, the first information further includes a periodicity extension field, and the periodicity extension field includes the first CG configuration periodicity.

According to the foregoing solution, the network device may configure different CG configuration periodicities in the RRC signaling, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

With reference to the second aspect, in some implementations of the second aspect, the method further includes: receiving second information from the network device, where the second information includes a second CG configuration periodicity, and the second CG configuration periodicity is shorter than the first CG configuration periodicity.

According to the foregoing solution, the network device may configure different CG configuration periodicities, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

With reference to the second aspect, in some implementations of the second aspect, the first CG configuration periodicity and the second CG configuration periodicity are carried in the RRC signaling, the RRC signaling includes a periodicity field and a periodicity extension field, and the periodicity field includes the second CG configuration periodicity.

According to the foregoing solution, the first CG configuration periodicity may be in the periodicity extension field. In this way, when receiving the first information including the periodicity extension field, the terminal device can transmit a data packet based on the first CG configuration periodicity, and the first CG configuration periodicity can match an actual data packet transmission periodicity. In this way, CG configuration resources are saved, and overheads of the network device are reduced.

With reference to the second aspect, in some implementations of the second aspect, the periodicity extension field is used by a first-type terminal device to determine a CG configuration periodicity, and the periodicity field is used by a second-type terminal device to determine a CG configuration periodicity.

According to the foregoing solution, according to the resource configuration method provided in this embodiment of this application, different CG configuration periodicities can be configured for a plurality of types of terminal devices. The CG configuration periodicity of the first-type terminal device is longer than the CG configuration periodicity of the second-type terminal device. The first-type terminal device has a lower capability and a larger data packet arrival interval, and the second-type terminal device has a higher capability and a smaller data packet arrival interval. Therefore, a CG configuration periodicity of each type of terminal device can match an actual data transmission periodicity of the type of terminal device. In this way, for the first-type terminal device, CG configuration resources are saved; and for the second-type terminal device, sufficient CG configuration resources are configured, and sending efficiency of uplink data is not reduced.

With reference to the second aspect, in some implementations of the second aspect, an association periodicity corresponding to the first CG configuration periodicity is 1, and at least one synchronization signal block SSB index in the association periodicity is mapped to a valid transmission occasion.

With reference to the second aspect, in some implementations of the second aspect, the first CG configuration periodicity is related to load of the network device.

According to the foregoing solution, the network device may determine the CG configuration periodicity based on a load condition. For example, a longer CG configuration periodicity is determined when the load of the network device is higher, and a shorter CG configuration periodicity is determined when the load of the network device is lower, to improve network utilization and reduce a failure rate of a communication system.

According to a third aspect, an embodiment of this application provides a resource configuration apparatus. The resource configuration apparatus includes a module configured to implement any one of the first aspect or the possible implementations of the first aspect.

According to a fourth aspect, an embodiment of this application provides a resource configuration apparatus. The resource configuration apparatus includes a module configured to implement any one of the second aspect or the possible implementations of the second aspect.

According to a fifth aspect, a communication apparatus is provided, and includes a processor and a memory. The processor is configured to execute instructions stored in the memory, to cause the communication apparatus to perform the resource configuration method according to any one of the first aspect or the possible implementations of the first aspect, or to cause the communication apparatus to perform the resource configuration method according to any one of the second aspect or the possible implementations of the second aspect.

According to a sixth aspect, a computer program product including instructions is provided. When the instructions are run by a communication apparatus, the communication apparatus is caused to perform the resource configuration method according to any one of the first aspect or the possible implementations of the first aspect, or the communication apparatus is caused to perform the resource configuration method according to any one of the second aspect or the possible implementations of the second aspect.

According to a seventh aspect, a computer-readable storage medium is provided, and includes computer program instructions. When the computer program instructions are executed by a communication apparatus, the communication apparatus performs the resource configuration method according to any one of the first aspect or the possible implementations of the first aspect, or the communication apparatus performs the resource configuration method according to any one of the second aspect or the possible implementations of the second aspect.

According to an eighth aspect, a communication method is provided. The method is applied to a network device. The method includes: receiving first information; and determining a first downlink channel bandwidth based on the first information, where the first information is information indicating whether a terminal device supports a capability of receiving a first downlink channel exceeding a first threshold bandwidth, and the first downlink channel is a multicast MBS physical downlink shared channel PDSCH without a hybrid automatic repeat request (hybrid automatic repeat request, HARQ) feedback.

For example, the first information may indicate that the terminal device supports the capability of receiving the first downlink channel exceeding the first threshold bandwidth. For another example, the first information may indicate that the terminal device does not support the capability of receiving the first downlink channel exceeding the first threshold bandwidth.

According to the foregoing solution, the network device may configure different first downlink channel bandwidths based on different terminal capabilities, to meet requirements of terminal devices having different capabilities. For example, when the terminal device supports receiving the first downlink channel exceeding a first threshold bandwidth capability, the network device configures, for the terminal device, the first downlink channel bandwidth that exceeds a first threshold; or when the terminal device does not support receiving the first downlink channel exceeding the first threshold bandwidth capability, the network device configures, for the terminal device, the first downlink channel bandwidth that does not exceed a first threshold.

With reference to the eighth aspect, in some implementations of the eighth aspect, the first threshold may be a preset value, for example, 5 MHz.

In a possible implementation, the first threshold is related to a subcarrier spacing. When the subcarrier spacing is 15 kHz, the first threshold is 25 resource blocks (resource blocks, RBs). When the subcarrier spacing is 30 kHz, the first threshold is 12 RBs.

According to a ninth aspect, a communication method is provided. The method is applied to a terminal device. The method includes: sending first information; and receiving a first downlink channel associated with the first information, where the first information indicates whether a terminal device supports receiving a first downlink channel exceeding a first threshold bandwidth capability, and the first downlink channel is a multicast MBS physical downlink shared channel PDSCH without a HARQ feedback.

According to the foregoing solution, the terminal device may obtain, through capability reporting, a first downlink channel bandwidth that is of a corresponding bandwidth and that is configured by a network device. For example, when the terminal device reports that the terminal device supports the capability of receiving the first downlink channel exceeding the first threshold bandwidth, the network device configures, for the terminal device, the first downlink channel bandwidth that exceeds the first threshold; or when the terminal device reports that the terminal device does not support the capability of receiving the first downlink channel exceeding the first threshold bandwidth, the network device configures, for the terminal device, the first downlink channel bandwidth that does not exceed the first threshold.

With reference to the ninth aspect, in some implementations of the ninth aspect, the first threshold may be a preset value, for example, 5 MHz.

In a possible implementation, the first threshold is related to a subcarrier spacing. When the subcarrier spacing is 15 kHz, the first threshold is 25 RBs. When the subcarrier spacing is 30 kHz, the first threshold is 12 RBs.

## BRIEF DESCRIPTION OF DRAWINGS

FIG. 1 is a diagram of a communication system to which a method according to an embodiment of this application is applicable;

FIG. 2 is a schematic flowchart of a resource configuration method 200 according to an embodiment of this application;

FIG. 3 is a diagram of a synchronization signal block according to an embodiment of this application;

FIG. 4 is a block diagram of a resource configuration apparatus according to an embodiment of this application; and

FIG. 5 is a block diagram of a communication apparatus according to an embodiment of this application.

## DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used for representing giving an example, an illustration, or descriptions. Any embodiment or design solution described as an "example" in this application should not be explained as being more preferred or having more advantages than another embodiment or design solution. Exactly, the term "example" is used for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "an embodiment", "some embodiments", or the like described in this specification means that one or more embodiments of this application include a specific feature, structure, or characteristic described with reference to embodiments. Therefore, statements "in an embodiment", "in some embodiments", "in some other embodiments", "in some additional embodiments", and the like described in different parts in this specification do not necessarily refer to a same embodiment, but mean "one or more but not all embodiments", unless otherwise specifically emphasized in other manners. Terms "include", "have", and their variants all mean "include but are not limited to", unless otherwise specifically emphasized in another manner.

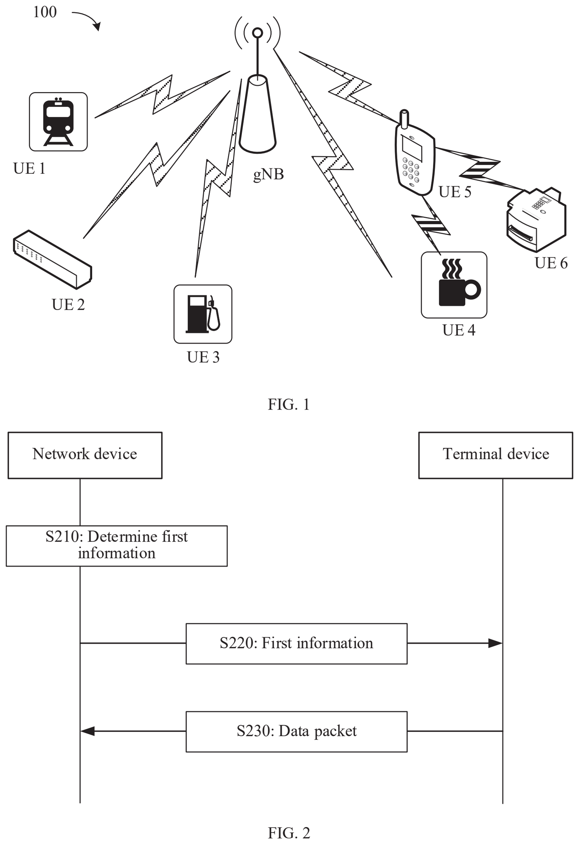

For ease of understanding of embodiments of this application, a communication system to which a method provided in embodiments of this application is applicable is first described in detail with reference to FIG. 1. FIG. 1 is a diagram of a communication system 100 to which a method according to an embodiment of this application is applicable. As shown in the figure, the communication system 100 may include at least one network device, for example, a gNB (gNB) in a 5G system shown in FIG. 1. The communication system 100 may further include at least one terminal device, for example, a user equipment (user equipment, UE) 1 to a UE 6 shown in FIG. 1. The network device may communicate with the terminal devices via a radio link. For example, the network device may send configuration information to the terminal device, and the terminal device may send uplink data to the network device based on the configuration information. For another example, the network device may send downlink data to the terminal device. Therefore, the gNB and the UE 1 to the UE 6 in FIG. 1 may form a communication system.

The terminal devices in the communication system 100, for example, the UE 4 to the UE 6, may also form a communication system. For example, the UE 4 may control the UE 5 and the UE 6 to execute corresponding instructions. This is not limited in this application.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a converged system of a plurality of systems. The technical solutions provided in this application may further be applied to device-to-device (device-to-device, D2D) communication system, vehicle-to-everything (vehicle-to-everything, V2X) communication system, machine-to-machine (machine-to-machine, M2M) communication system, machine type communication (machine type communication, MTC) system, an internet of things (internet of things, IoT) communication system, or another communication system. For example, the technical solutions provided in this application may be applied to a cellular communication system, or may be applied to any communication system having a similar structure or function.

A network element in the communication system may send a signal to another network element or receive a signal from another network element. The signal may include information, signaling, data, or the like. The network element may alternatively be replaced with an entity, a network entity, a device, a communication apparatus, a communication module, a node, a communication node, a core network device, or the like. For example, the communication system may include at least one terminal device and at least one network device. The network device may send a downlink signal to the terminal device, and/or the terminal device may send an uplink signal to the network device.

In embodiments of this application, the terminal device may be referred to as a UE, an access terminal, a subscriber unit, a subscriber station, a mobile station, a remote station, a remote terminal, a mobile device, a user terminal, a terminal, a wireless communication apparatus, a user agent, or a user apparatus.

The terminal device may be an entity on a user side that is configured to receive or transmit (including reflecting) a signal, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a smart speaker, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a communication apparatus or another processing device connected to a wireless modem, a sensor such as a train detector or a gas station, a terminal device in a 5G network, a terminal device in a future evolved public land mobile network (public land mobile network, PLMN), or the like. This is not limited in embodiments of this application. A function of the terminal device may further include collecting data, receiving control information and downlink data of the network device, sending an electromagnetic wave, and transmitting uplink data to the network device.

By way of example but not limitation, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smartwatches or smart glasses, and devices that dedicated to only one type of application function and need to work with other devices such as smartphones, such as various smart bands or smart jewelry for monitoring physical signs.

By way of example but not limitation, the terminal device may alternatively be an NR reduced capability (reduced capability, RedCap) terminal device. For specific meanings and functions of the NR RedCap terminal device, refer to the following descriptions. Details are not described herein again.

In embodiments of this application, an apparatus configured to implement a function of the terminal device may be a terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following various names in a broad sense, or may be replaced with the following names: for example, a NodeB (NodeB), an evolved NodeB (evolved NodeB, eNB), a next generation NodeB (next generation NodeB, gNB), a relay station (relay), an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). For example, for a base station in a future mobile communication system or an access node in a Wi-Fi system, a specific technology and a specific device form used by the network device are not limited in embodiments of this application.

The network device may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners of the DU and RU are different, and correspond to different categories (category, Cat) of eCPRIs, such as eCPRI Cats A, B, C, D, E, and F.

The eCPRI Cat A is used as an example. For downlink transmission, with layer mapping as a splitting point, the DU is configured to implement the layer mapping and one or more functions (to be specific, one or more of encoding, rate matching, scrambling, modulation, and layer mapping) before the layer mapping, and another function (for example, one or more of RE mapping, BF, or IFFT/CP) after the layer mapping is moved to the RU for implementation. For uplink transmission, with RE demapping as a splitting point, the DU is configured to implement the demapping and one or more functions (to be specific, one or more functions of decoding, rate de-matching, descrambling, demodulation, inverse discrete Fourier transform (inverse discrete Fourier transform, IDFT), channel equalization, and RE demapping) before the demapping, and another function (for example, one or more of digital BF or fast Fourier transform (fast Fourier transform, FFT)/CP removal) after the demapping is moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used in cooperation with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

In some wireless communication systems, the terminal device performs wireless communication with the network device, to send an electronic signal to the network device or receive an electronic signal from the network device. The electronic signal may include data or a message. Wireless communication from the terminal device to the network device is referred to as uplink communication or uplink transmission. Wireless communication from the network device to the terminal device is referred to as downlink communication or downlink transmission.

Resources are needed to perform uplink and downlink communication. For example, the UE may send data to a base station in a wireless manner through uplink transmission at a specific frequency or in a specific slot. The used frequency and slot are examples of resources (sometimes referred to as time-frequency resources).

Some wireless communication systems may support grant-based uplink transmission. To be specific, if the terminal device expects to send data to the network device, the terminal device first requests an appropriate uplink resource from the network device. Once the network device grants the requested uplink resource, the terminal device sends the uplink transmission by using the granted uplink resource. For example, the uplink resource that may be granted by the network device is a set of time-frequency positions in an uplink orthogonal frequency division multiple access (orthogonal frequency division multiple access, OFDMA) frame.

Some wireless communication systems may support configured grant (configured grant, CG) uplink transmission. To be specific, a terminal device may send uplink transmission by using some uplink resources that may be shared with another terminal device, and does not need to specially request to use the resources, or the resource does not need to be specially granted by a network device. CG transmission does not need a dynamic and explicit scheduling grant of the network device. The CG transmission is sometimes also referred to as grant-free (grant-free, GF) transmission.

The CG transmission may be configured by using a radio resource control (radio resource control, RRC) signaling message. The RRC signaling message may include one or more parameters of one or more terminal devices, to preconfigure the CG transmission. The one or more parameters include one or more parameter sets. The CG transmission has a specific periodicity, and the periodicity may be referred to as a CG configuration periodicity. The CG configuration periodicity is represented by a periodicity (periodicity) field in a configured grant configuration (ConfiguredGrantConfig) information element (information element, IE).

In the CG transmission, a time-frequency resource of a physical uplink shared channel (physical uplink shared channel, PUSCH) may be referred to as a transmission occasion (transmission occasion, TO), and the TO is associated with a demodulation reference signal (demodulation reference signal, DMRS) configured for CG PUSCH transmission.

Starting from a frame whose system frame number (system frame number, SFN) is 0, each frame may be mapped to a synchronization signal/physical broadcast channel block (synchronization signal/physical broadcast channel block, SSB) index, where the SSB index may be used to distinguish between different SSBs. Some SSB indexes may be mapped to valid TOs and associated DMRSs, and such SSB indexes are available. However, unavailable SSB indexes cannot be mapped to valid TOs and associated DMRSs. For example, the CG configuration periodicity may be 5 ms. In one periodicity of 5 ms, SSB indexes corresponding to all frames may be unavailable. Therefore, more periodicities of 5 ms are needed. For example, an SSB beam corresponding to an available SSB index may have a specific direction, but there is no SSB beam having the specific direction in a first periodicity of 5 ms. Therefore, all SSB indexes in the periodicity of 5 ms are unavailable. If there is an SSB beam having the specific direction in a next periodicity of 5 ms, it indicates that there are available SSB indexes in the two periodicities of 5 ms, and an association periodicity is 2. In other words, if there is an available SSB index in N CG configuration periodicities, an association periodicity of the CG configuration periodicity is N. Table 1 shows a mapping relationship between the CG configuration periodicity and the association periodicity.

Table 1

| CG configuration periodicity/ms | Association periodicity |
|---|---|
| 5 | {1, 2, 4, 8, 16, 32, 64, 128} |
| 8 | {1, 2, 4, 5, 8, 10, 16, 20, 40, 80} |
| 10 | {1, 2, 4, 8, 16, 32, 64} |
| 16 | {1, 2, 4, 5, 8, 10, 20, 40} |
| 20 | {1, 2, 4, 8, 16, 32} |
| 32 | {1, 2, 4, 5, 10, 20} |
| 40 | {1, 2, 4, 8, 16} |
| 64 | {1, 2, 5, 10} |
| 80 | {1, 2, 4, 8} |
| 128 | {1, 5} |
| 160 | {1, 2, 4} |
| 320 | {1,2} |
| 640 | {1} |

It can be learned from Table 1 that, currently, a maximum transmission periodicity defined by the periodicity field is 640 ms.

Some wireless communication systems are applicable to massive machine type communication (massive machine type communication, mMTC), and the mMTC can resolve a problem that conventional mobile communication cannot well support applications of internet of things and vertical industries, and is oriented to scenarios based on low power consumption and massive connectivity. For example, the mMTC may be oriented to application scenarios such as a smart city, environment monitoring, a smart home, and forest fire prevention that aim at sensing and data collection. These application scenarios are characterized by small data packets, low power consumption, massive connectivity, and the like.

In an mMTC scenario, a sporadic service usually exists, and a data packet arrival interval is large, far exceeding 640 ms. In other words, the data packet arrival interval may be far longer than a CG configuration periodicity, causing a waste of CG configuration resources.

Therefore, how to reduce the waste of CG configuration resources is an urgent problem to be resolved.

FIG. 2 is a schematic flowchart of a resource configuration method 200 according to an embodiment of this application. According to the resource configuration method 200, a waste of CG configuration resources can be reduced.

S210: A network device determines first information, where the first information includes a first CG configuration periodicity, and a maximum transmission periodicity corresponding to the first CG configuration periodicity is longer than 640 ms.

The first information is not limited in this application. For example, the first information may be Configured-GrantConfig above, or may be other information.

According to the foregoing solution, a maximum transmission periodicity corresponding to a CG configuration periodicity is longer than 640 ms, so that when a data packet arrival interval is large (for example, the data packet arrival interval is greater than 640 ms), according to the resource configuration method provided in this embodiment of this application, the CG configuration periodicity can match an actual data transmission periodicity, to save CG configuration resources.

In some embodiments, the maximum transmission periodicity corresponding to the first CG configuration periodicity includes any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

However, the maximum transmission periodicity corresponding to the first CG configuration periodicity is not limited to only the foregoing values in this application, for example, may alternatively be 1000 ms or 10000000 ms.

When the maximum transmission periodicity corresponding to the first CG configuration periodicity is 81920 ms, a minute-level service may be matched. When the maximum transmission periodicity corresponding to the first CG configuration periodicity is 5242880 ms, an hour-level service may be matched.

In some embodiments, transmission periodicities included in the first CG configuration periodicity are 1280 ms, 2560 ms, 5120 ms, 10240 ms, 20480 ms, 40960 ms, and 81920 ms. In this parameter set, a maximum level at which a service can be matched is a minute level.

In some other embodiments, transmission periodicities included in the first CG configuration periodicity are 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms. In this parameter set, a maximum level at which a service can be matched is an hour level, and minute-level and second-level services can also be matched.

In still some embodiments, transmission periodicities included in the first CG configuration periodicity are 81920 ms, 163840 ms, 327680 ms, 655360 ms, 1310720 ms, 2621440 ms, and 5242880 ms. In this parameter set, only minute-level and hour-level services can be matched.

According to the foregoing solution, a maximum transmission periodicity corresponding to a CG configuration periodicity is longer than 640 ms, and there are a plurality of choices, so that when a data packet arrival interval is large, the CG configuration periodicity can match a second-level service transmission periodicity, a minute-level service transmission periodicity, or an hour-level service transmission periodicity, to save CG configuration resources.

In some embodiments, the determining the first information includes: determining the first CG configuration periodicity based on load of the network device. In other words, the first CG configuration periodicity is related to the load of the network device.

According to the foregoing solution, the network device may determine the CG configuration periodicity based on a load condition. For example, a longer CG configuration periodicity is determined when the load of the network device is higher, and a shorter CG configuration periodicity is determined when the load of the network device is lower, to improve network utilization and reduce a failure rate of a communication system.

S220: The network device sends the first information to a terminal device. Correspondingly, the terminal device receives the first information from the network device.

In some embodiments, that the network device sends the first information to the terminal device includes: The network device sends radio resource control RRC signaling, where the RRC signaling carries the first information, the first information further includes a periodicity extension field, and the periodicity extension field includes the first CG configuration periodicity. Correspondingly, that the terminal device receives the first information from the network device includes: The terminal device receives the radio resource control RRC signaling.

For example, the periodicity extension field may be "cg-SDT-PeriodicityExt-r18". The periodicity extension field includes a CG configuration periodicity. For example, ConfiguredGrantConfig may include the periodicity extension field "cg-SDT-PeriodicityExt-r18".

In some embodiments, values of the periodicity extension field may be 1280 ms, 2560 ms, 5120 ms, 10240 ms, 20480 ms, 40960 ms, and 81920 ms. In this parameter set, a maximum level at which a service can be matched is a minute level.

In some other embodiments, values of the periodicity extension field may be 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms. In this parameter set, a maximum level at which a service can be matched is an hour level, and minute-level and second-level services can also be matched.

In still some embodiments, values of the periodicity extension field may be 81920 ms, 163840 ms, 327680 ms, 655360 ms, 1310720 ms, 2621440 ms, and 5242880 ms. In this parameter set, only minute-level and hour-level services can be matched.

According to the foregoing solution, the first CG configuration periodicity may be in the periodicity extension field. In this way, when receiving the first information including the periodicity extension field, the terminal device can transmit a data packet based on the first CG configuration periodicity, and the first CG configuration periodicity can match an actual data packet transmission periodicity. In this way, CG configuration resources are saved, and overheads of the network device are reduced.

S230: The terminal device sends a data packet to the network device based on the first information. Correspondingly, the network device receives the data packet from the terminal device.

In some embodiments, the sending the data packet to the network device based on the first information includes: sending a data packet of a CG-small data transmission (small data transmission, SDT) service to the network device based on the first information. In other words, the terminal device can support a CG-SDT service.

It should be understood that the CG-SDT service further includes an extended CG-SDT service, and the extended CG-SDT service is a service whose arrival interval is far greater than 640 ms, for example, a service that arrives at an interval of several minutes or several hours.

However, a specific form of the data packet is not limited in this application. For example, the data packet may be a data packet of another service.

The CG-SDT service may be understood as a small data transmission service based on a preconfigured resource. In the resource configuration method provided in this embodiment of this application, the terminal device supports the CG-SDT service, so that power consumption can be reduced, signaling overheads can be reduced, network efficiency can be improved, and a delay can be reduced.

In some embodiments, the sending the data packet of the CG-SDT service to the network device based on the first information includes: determining, based on the first CG configuration periodicity and a system hyper frame number, a time-domain symbol position corresponding to the data packet of the CG-SDT service; and sending the data packet of the CG-SDT service to the network device based on the time-domain symbol position. In other words, in some embodiments, a time-domain symbol position corresponding to the CG-SDT service is related to the first CG configuration periodicity and a system hyper frame number.

In other words, a hyper frame may be used as a maximum time domain granularity to determine a time-domain symbol position of a PUSCH. It should be noted that a service of a data packet determined based on the system hyper frame number is not limited to the CG-SDT service, and may alternatively be another service, for example, may alternatively be a large data transmission service.

A hyper frame, a radio frame, a slot, and a symbol are parameters in time domain. A maximum of 1024 hyper frames are supported, one hyper frame includes 1024 radio frames, and duration of one radio frame may be 10 ms. When a subcarrier spacing is 15 kHz, one radio frame includes 10 slots. Each slot may include 14 symbols.

For example, the time-domain symbol position may be determined by using Formula 1.

$$\text{Time-domain symbol position} = \text{Hyper frame position} + \text{Radio frame position} + \text{Slot position} + \text{Symbol position} \qquad \text{(Formula 1)}$$

For example, Formula 1 may be expressed in a form of Formula 2.

$$\text{Time-domain symbol position} = (\text{HSFN} \times \text{numberOfFramesPerHyperframe} \times \text{numberOfSlotsPerFrame} \times \text{numberOfSymbolsPerSlot}) + (\text{SFN} \times \text{numberOfSlotsPerFrame} \times \text{numberOfSymbolsPerSlot}) + (\text{Slot number in the frame} \times \text{numberOfSymbolsPerSlot}) + \text{Symbol number in the slot} \qquad \text{(Formula 2)}$$

HSFN represents the system hyper frame number. A quantity of radio frames per hyper frame (numberOfFramesPerHyperframe) may be a quantity of radio frames in each hyper frame, for example, may be 1024. A quantity of slots per radio frame (numberOfSlotsPerFrame) may be a quantity of slots in each radio frame, for example, may be 10. A quantity of symbols per slot (numberOfSymbolsPerSlot) may be a quantity of symbols in each slot, for example, may be 14. A slot number (slot number in the frame) may be a sequence number of the slot in a radio frame.

In Formula 2, a 1st item indicates hyper frame duration, a 2nd item indicates radio frame duration, a 3rd item

indicates slot duration, and a $4^{th}$ item indicates symbol duration. The foregoing "duration" is in a unit of a symbol.

For example, in an $N^{th}$ uplink grant, Formula 1 may alternatively be expressed in a form of Formula 3.

$$\text{Time-domain symbol position} = (\text{timeReferenceHSFN} \times \text{numberOfFramesPerHyperframe} \times \text{numberOfSlotsPerFrame} \times \text{numberOfSymbolsPerSlot} + \text{timeReferenceSFN} \times \text{numberOfSlotsPerFrame} \times \text{numberOfSymbolsPerSlot} + \text{timeDomainOffset} \times \text{numberOfSymbolsPerSlot} + S + N \times \text{cg-SDT-PeriodicityExt-r18}) \text{ modulo } (1024 \times 1024 \times \text{numberOfSlotsPerFrame} \times \text{numberOfSymbolsPerSlot}) \quad \text{(Formula 3)}$$

A time reference HSFN (timereferenceHSFN) represents a system hyper frame number based on a preset time reference. A time reference SFN (timereferenceSFN) represents a system frame number based on the preset time reference. A time domain offset (timeDomainOffset) represents a slot number based on the preset time reference. S may represent a position of a starting symbol in a slot. "cg-SDT-PeriodicityExt-r18" indicates a quantity of symbols in one CG configuration periodicity. N is greater than or equal to 0. For another parameter, refer to the descriptions of Formula 2. Details are not described herein again.

When a system runs more than 1024 hyper frames, a remainder of a current symbol quantity relative to the 1024 hyper frames may be determined according to the modulo (modulo division) function in Formula 3, to reduce operation overheads of the system.

For a sporadic service, an actual data transmission periodicity may be several minutes or even several hours. In the resource configuration method provided in this embodiment of this application, a hyper frame is introduced, so that a longer CG configuration periodicity can be supported. In comparison with a solution in which a time-domain symbol position is determined based only on a quantity of radio frames, a quantity of slots, and a quantity of symbols, in the resource configuration method provided in this embodiment of this application, 1024 radio frames are extended to 1024 hyper frames, and an increase by 1024 times is achieved, so that a CG configuration periodicity can match an hour-level service transmission periodicity. In this way, CG configuration resources are saved, and overheads of the network device are reduced.

In some embodiments, the method 200 further includes: The network device sends second information to the terminal device, where the second information includes a second CG configuration periodicity, and the second CG configuration periodicity is shorter than the first CG configuration periodicity. Correspondingly, the method 200 further includes: receiving the second information from the network device.

The second information and the first information may be carried in same signaling, or may be carried in different signaling. This is not limited in this application. The second information and the first information may be sent simultaneously, or may not be sent simultaneously. This is not limited in this application.

For example, a maximum transmission periodicity corresponding to the second CG configuration periodicity may be 640 ms.

According to the foregoing solution, the network device may configure different CG configuration periodicities, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

In some embodiments, the first CG configuration periodicity and the second CG configuration periodicity are carried in the RRC signaling, the RRC signaling includes a periodicity field and a periodicity extension field, and the periodicity field includes the second CG configuration periodicity.

In other words, both the first information and the second information may be carried in the RRC signaling. For example, a "periodicity" field in ConfiguredGrantConfig may be used as a periodicity field, and the "periodicity" field may include the second CG configuration periodicity. In addition, "cg-SDT-PeriodicityExt-r18" is used as an extension field, and "cg-SDT-PeriodicityExt-r18" may include the first CG configuration periodicity.

According to the foregoing solution, the network device may configure different CG configuration periodicities in the RRC signaling, so that the terminal device can perform selection flexibly based on a service requirement. For example, for a service with a larger data packet arrival interval, the first CG configuration periodicity may be selected, to save CG configuration resources and reduce overheads of the network device. For example, for a service with a smaller data packet arrival interval, the second CG configuration periodicity may be selected, so that sending efficiency of uplink data is not reduced.

In some embodiments, the periodicity extension field is used by a first-type terminal device to determine a CG configuration periodicity, and the periodicity field is used by a second-type terminal device to determine a CG configuration periodicity.

For example, the first-type terminal device may include an NR reduced capability (reduced capability, RedCap) terminal device, and the second-type terminal device may include a legacy (legacy) terminal device (for example, an NR Rel-15 terminal device or a Rel-16 terminal device). In comparison with the legacy terminal device, the NR RedCap terminal device has a lower data transmission capability or lower costs. For example, the NR RedCap terminal device may include an industrial sensor, a security camera, a smart grid-related device, a high-end wearable device, and a high-end logistics tracking device.

It should be noted that the NR RedCap terminal device may be further described by using another term, and a terminal device that has a capability that is the same as or similar to that of the NR RedCap terminal device also falls within a range of the NR RedCap terminal device.

In some embodiments, a difference between the first-type terminal device and the second-type terminal device includes at least one of the following:

(1) Bandwidth capabilities are different. For example, the second-type terminal device can support data transmission with the network device by using a frequency resource of a maximum of 100 MHz on one carrier simultaneously, but the first-type terminal device can support data transmission with the network device by using a frequency resource of a maximum of 20 MHz, 10 MHz, or 5 MHz on one carrier simultaneously.

(2) Quantities of transceiver antennas are different. For example, a minimum antenna configuration supported by the second-type terminal device is 4T2R. To be specific, in the minimum antenna configuration, four receive antennas are used for receiving downlink data, and two transmit antennas are used for sending uplink data. However, a maximum antenna configuration supported by the first-type terminal device may be lower than 4T2R. For example, first-type UE supports only 2R1T, or may support 2R2T.

(3) Maximum uplink transmit power is different. For example, maximum uplink transmit power of the second-type terminal device may be 23 dBm or 26 dBm, but maximum uplink transmit power of the first-type terminal device may be one value from 4 dBm to 20 dBm.

(4) The first-type terminal device and the second-type terminal device correspond to different protocol versions. For example, the NR Rel-15 or NR Rel-16 terminal device may be considered as the second-type terminal device, but the first-type terminal device may be considered as an NR Rel-17 or NR Rel-18 terminal device.

(5) Carrier aggregation (carrier aggregation, CA) capabilities are different. For example, the second-type terminal device may support carrier aggregation, but the first-type terminal device does not support carrier aggregation. For another example, both the first-type terminal device and the second-type terminal device may support carrier aggregation, but a maximum quantity of carriers for aggregation supported by the second-type terminal device is greater than a maximum quantity of carriers for aggregation supported by the first-type terminal device simultaneously. For example, the second-type terminal device may support aggregation of a maximum of five carriers or 32 carriers simultaneously, but the first-type terminal device supports aggregation of a maximum of two carriers simultaneously.

(6) The second-type terminal device supports full-duplex FDD, but the first-type terminal device supports only half-duplex FDD.

(7) Data processing delays of the first-type terminal device and the second-type terminal device are different. For example, a minimum delay between receiving downlink data and sending a feedback for the downlink data by the second-type terminal device is less than a minimum delay between receiving downlink data and sending a feedback for the downlink data by the first-type terminal device; and/or a minimum delay between sending uplink data and receiving a feedback for the uplink data by the second-type terminal device is less than a minimum delay between sending uplink data and receiving a feedback for the uplink data by the first-type terminal device.

(8) The first-type terminal device and the second-type terminal device correspond to different uplink transmission peak rates and/or downlink transmission peak rates and processing capabilities. The transmission peak rate and the processing capability of the first-type terminal device are lower than the transmission peak rate and the processing capability of the second-type terminal device.

According to the foregoing solution, according to the resource configuration method provided in this embodiment of this application, different CG configuration periodicities can be configured for a plurality of types of terminal devices. The CG configuration periodicity of the first-type terminal device is longer than the CG configuration periodicity of the second-type terminal device. The first-type terminal device has a lower capability and a larger data packet arrival interval, and the second-type terminal device has a higher capability and a smaller data packet arrival interval. Therefore, a CG configuration periodicity of each type of terminal device can match an actual data transmission periodicity of the type of terminal device. In this way, for the first-type terminal device, CG configuration resources are saved; and for the second-type terminal device, sufficient CG configuration resources are configured, and sending efficiency of uplink data is not reduced.

In some embodiments, an association periodicity corresponding to the first CG configuration periodicity is 1, and at least one SSB index in the association periodicity is mapped to a valid transmission occasion.

The SSB periodicity needs to be considered when the association periodicity is determined. The association periodicity is related to a maximum SSB periodicity and a quantity of SSBs included in one SSB burst (burst).

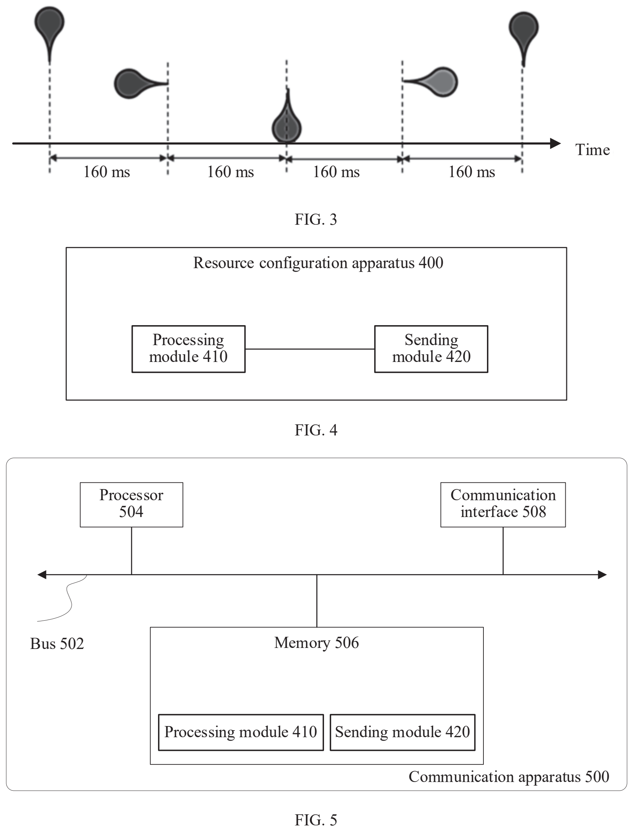

FIG. 3 is a diagram of a synchronization signal block according to an embodiment of this application. Refer to FIG. 3. A maximum SSB periodicity may be configured as 160 ms. In a sub-3G frequency range, a quantity of SSBs included in one SSB burst is 4. SSB beams in different directions are sequentially sent at an interval of 160 ms, and at least one repeated beam appears after 640 ms. Therefore, in a maximum of 640 ms, there is one available SSB index in one association periodicity. When the transmission periodicity corresponding to the first CG configuration periodicity is longer than or equal to 640 ms, an association periodicity corresponding to each first CG configuration periodicity is 1, and it can always be ensured that there is one available SSB index in one association periodicity. In other words, when the first CG configuration periodicity is 1280 ms, 2560 ms, 5120 ms, 10240 ms, 20480 ms, 40960 ms, 81920 ms, 163840 ms, 327680 ms, 655360 ms, 1310720 ms, 2621440 ms, or 5242880 ms, the association periodicity is always 1. In other words, when the first CG configuration periodicity is 1280 ms, the association periodicity is 1; when the first CG configuration periodicity is 2560 ms, the association periodicity is 1; when the first CG configuration periodicity is 5120 ms, the association periodicity is 1; when the first CG configuration periodicity is 10240 ms, the association periodicity is 1; when the first CG configuration periodicity is 20480 ms, the association periodicity is 1; when the first CG configuration periodicity is 40960 ms, the association periodicity is 1; when the first CG configuration periodicity is 81920 ms, the association periodicity is 1; when the first CG configuration periodicity is 163840 ms, the association periodicity is 1; when the first CG configuration periodicity is 327680 ms, the association periodicity is 1; when the first CG configuration periodicity is 655360 ms, the association periodicity is 1; when the first CG configuration periodicity is 1310720 ms, the association periodicity is 1; when the first CG configuration periodicity is 2621440 ms, the association periodicity is 1; and when the first CG configuration periodicity is 5242880 ms, the association periodicity is 1. Table 2 shows a mapping relationship between the first CG configuration periodicity and the association periodicity. For differentiation, the CG configuration periodicity shown in Table 1 may be considered as the second CG configuration periodicity. In other words, the mapping relationship shown in Table 1 may be considered as a mapping relationship between the second CG configuration periodicity and the association periodicity.

Table 2

| First CG configuration periodicity/ms | Association periodicity |
|---|---|
| 1280 | {1} |
| 2560 | {1} |
| 5120 | {1} |
| 10240 | {1} |
| 20480 | {1} |
| 40960 | {1} |
| 81920 | {1} |
| 163840 | {1} |
| 327680 | {1} |
| 655360 | {1} |
| 1310720 | {1} |
| 2621440 | {1} |
| 5242880 | {1} |

In a possible example, the maximum SSB periodicity may be configured as 160 ms, and the quantity of SSBs included in one SSB burst is 8. In a maximum of 1280 ms, there is one available SSB index in one association periodicity. When the transmission periodicity corresponding to the first CG configuration periodicity is longer than or equal to 1280 ms, an association periodicity corresponding to each first CG configuration periodicity is 1, and it can always be ensured that there is one available SSB index in one association periodicity. In other words, for the mapping relationship between the first CG configuration periodicity and the association periodicity, still refer to Table 2. For the mapping relationship between the second CG configuration periodicity and the association periodicity, refer to the following Table 3.

Table 3

| Second CG configuration periodicity/ms | Association periodicity |
|---|---|
| 5 | {1, 2, 4, 8, 16, 32, 64, 128, 256} |
| 8 | {1, 2, 4, 5, 8, 10, 16, 20, 40, 80, 160} |
| 10 | {1, 2, 4, 8, 16, 32, 64, 128} |
| 16 | {1, 2, 4, 5, 8, 10, 20, 40, 80} |
| 20 | {1, 2, 4, 8, 16, 32, 64} |
| 32 | {1, 2, 4, 5, 10, 20, 40} |
| 40 | {1, 2, 4, 8, 16, 32} |
| 64 | {1, 2, 5, 10, 20} |
| 80 | {1, 2, 4, 8, 16} |
| 128 | {1, 5, 10} |
| 160 | {1, 2, 4, 8} |
| 320 | {1, 2, 4} |
| 640 | {1,2} |

In another possible example, the maximum SSB periodicity may be configured as 160 ms, and the quantity of SSBs included in one SSB burst is 16. In a maximum of 2560 ms, there is one available SSB index in one association periodicity. When the transmission periodicity corresponding to the first CG configuration periodicity is longer than or equal to 2560 ms, an association periodicity corresponding to each first CG configuration periodicity is 1, and it can always be ensured that there is one available SSB index in one association periodicity. When the transmission periodicity corresponding to the first CG configuration periodicity is equal to 1280 ms, the association periodicity corresponding to the first CG configuration periodicity is 1 or 2. In other words, for the mapping relationship between the first CG configuration periodicity and the association periodicity, refer to the following Table 4. For the mapping relationship between the second CG configuration periodicity and the association periodicity, refer to the following Table 5.

Table 4

| First CG configuration periodicity/ms | Association periodicity |
|---|---|
| 1280 | {1,2} |
| 2560 | {1} |
| 5120 | {1} |
| 10240 | {1} |
| 20480 | {1} |
| 40960 | {1} |
| 81920 | {1} |
| 163840 | {1} |
| 327680 | {1} |
| 655360 | {1} |
| 1310720 | {1} |
| 2621440 | {1} |
| 5242880 | {1} |

Table 5

| Second CG configuration periodicity/ms | Association periodicity |
|---|---|
| 5 | {1, 2, 4, 8, 16, 32, 64, 128, 256, 512} |
| 8 | {1, 2, 4, 5, 8, 10, 16, 20, 40, 80, 160, 320} |
| 10 | {1,2,4,8, 16, 32, 64, 128, 256} |
| 16 | {1, 2, 4, 5, 8, 10, 20, 40, 80, 160} |
| 20 | {1, 2, 4, 8, 16, 32, 64, 128} |
| 32 | {1, 2, 4, 5, 10, 20, 40, 80} |
| 40 | {1, 2, 4, 8, 16, 32, 64} |
| 64 | {1, 2, 5, 10, 20, 40} |
| 80 | {1, 2, 4, 8, 16, 32} |
| 128 | {1, 5, 10, 20} |
| 160 | {1, 2, 4, 8, 16} |
| 320 | {1, 2, 4, 8} |
| 640 | {1, 2, 4} |

In some embodiments, when the RRC signaling includes the periodicity extension field cg-SDT-PeriodicityExt-r18 of the CG-SDT service, the terminal device determines the association periodicity based on the mapping relationship shown in Table 2, Table 4, or a similar mapping table. When the RRC signaling does not include the periodicity extension field, the terminal device transmits the CG-SDT service by using the periodicity field periodicity, and determines the association periodicity based on the mapping relationship shown in Table 1, Table 3, Table 5, or a similar mapping table.

In some embodiments, the terminal device may further select different configuration periodicity parameter sets based on different capabilities. When the terminal device has a capability of supporting the CG-SDT service, a mapping mode shown in Table 2, Table 4, or a similar mapping table may be selected based on the CG-SDT periodicity extension field. When the terminal device does not have the capability of supporting the CG-SDT service, a mapping mode shown in Table 1, Table 3, Table 5, or a similar mapping table is selected based on the periodicity field. Alternatively, when the terminal device has a capability of supporting a reduced capability, a mapping mode shown in Table 2, Table 4, or a similar mapping table may be selected based on the CG-SDT periodicity extension field. When the terminal device does not have the capability of supporting the reduced capability, a mapping mode shown in Table 1, Table 3, Table 5, or a similar mapping table is selected based on the periodicity field. A possible reduced capability includes at least one of the following: A maximum bandwidth is 20 MHz; and a peak rate is 10 Mbit/s. However, this is not limited in this application. For example, when the terminal device supports another capability, a mapping mode shown in Table 2, Table 4, or a similar mapping table may be selected based on the CG-SDT periodicity extension field.

In some embodiments, the terminal device may further determine, based on different capabilities, association periodicities corresponding to different fields. When the terminal device has a capability of supporting the CG-SDT service, the terminal device may determine, based on the CG-SDT periodicity extension field, that the association periodicity is 1. When the terminal device does not have the capability of supporting the CG-SDT service, the terminal device determines the association periodicity based on the periodicity field. Alternatively, when the terminal device has a capability of supporting a reduced capability, a mapping mode shown in Table 2, Table 4, or a similar mapping table may be selected based on the CG-SDT periodicity extension field. When the terminal device does not have the capability of supporting the reduced capability, a mapping mode shown in Table 1, Table 3, Table 5, or a similar mapping table is selected based on the periodicity field. A possible reduced capability includes at least one of the following: A maximum bandwidth is 20 MHz; and a peak rate is 10 Mbit/s. However, this is not limited in this application. For example, when the terminal device supports another capability, the terminal device may also determine, based on the CG-SDT periodicity extension field, that the association periodicity is 1.

The foregoing description "based on the CG-SDT periodicity extension field" means that when the CG-SDT periodicity extension field exists, processing is performed based on the CG-SDT periodicity extension field. If the CG-SDT periodicity extension field does not exist, processing is performed based on a CG-SDT periodicity field. The foregoing describes in detail the method embodiments of this application. The following describes apparatus embodiments in embodiments of this application. The apparatus embodiments correspond to the method embodiments. Therefore, for parts that are not described in detail, refer to the foregoing method embodiments. An apparatus may implement any one of the possible implementations of the foregoing method.

FIG. 4 is a block diagram of a resource configuration apparatus according to an embodiment of this application.

As shown in FIG. 4, the resource configuration apparatus 400 includes: a processing module 410, configured to determine first information, where the first information includes a first configured grant CG configuration periodicity, and a maximum transmission periodicity corresponding to the first CG configuration periodicity is longer than 640 ms; and a sending module 420, configured to send the first information to a terminal device.

Both the processing module 410 and the sending module 420 may be implemented by software, or may be implemented by hardware. For example, the following uses the processing module 410 as an example to describe an implementation of the processing module 410. Similarly, for an implementation of the sending module 420, refer to the implementation of the processing module 410.

The module is used as an example of a software functional unit, and the processing module 410 may include code run on a computing instance. The computing instance may include at least one of a physical host (a communication apparatus), a virtual machine, and a container. Further, there may be one or more computing instances.

The module is used as an example of a hardware functional unit, and the processing module 410 may include at least one communication apparatus, for example, a server, a network device, or a terminal device. Alternatively, the processing module 410 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

An embodiment of this application further provides another resource configuration apparatus, including: a receiving module, configured to receive first information from a network device, where the first information includes a first configured grant CG configuration periodicity, and a maximum transmission periodicity corresponding to the first CG configuration periodicity is longer than 640 ms; and a sending module, configured to send a data packet to the network device based on the first information.

This application further provides a communication apparatus 500. As shown in FIG. 5, the communication apparatus 500 includes a bus 502, a processor 504, a memory 506, and a communication interface 508. The processor 504, the memory 506, and the communication interface 508 communicate with each other through the bus 502. The communication apparatus 500 may be a server, a network device, or a terminal device. It should be understood that quantities of processors and memories in the communication apparatus 500 are not limited in this application.

The bus 502 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, the bus is represented by using only one line in FIG. 5. However, this does not mean that there is only one bus or only one type of bus. The bus 502 may include a path for information transmission between components (for example, the memory 506, the processor 504, and the communication interface 508) of the communication apparatus 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). Alternatively, the memory 506 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of the foregoing processing module 410 and the foregoing sending module 420, so as to implement a resource configuration method on a network device side. In other words, the memory 506 stores instructions for performing the resource configuration method.

In some other embodiments, the memory 506 stores executable program code, and the processor 504 executes the executable program code to separately implement functions of the foregoing receiving module and the foregoing sending module, so as to implement a resource configuration method on a terminal device side. In other words, the memory 506 stores instructions for performing the resource configuration method.

The communication interface 508 uses a transceiver module, for example, but not limited to, a network interface card or a transceiver, to implement communication between the communication apparatus 500 and another device or a communication network.

An embodiment of this application further provides a computer program product including instructions. The computer program product may be software or a program product that includes the instructions and that can run on a communication apparatus or be stored in any usable medium. When the computer program product runs on at least one communication apparatus, the at least one communication apparatus is caused to perform the foregoing resource configuration method.

An embodiment of this application further provides a computer-readable storage medium. The computer-readable storage medium may be any usable medium that can be stored in a communication apparatus, or a data storage device, like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the communication apparatus to perform the foregoing resource configuration method.

This application further provides a chip, including a processor, configured to invoke instructions from a memory and run the instructions stored in the memory, to cause a communication apparatus on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and a function of the network device or the terminal device in any one of the foregoing embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a terminal device, a network device, or the like) to perform all or some of steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource configuration method, wherein the method is applied to a network device, and the method comprises:

    determining first information, wherein the first information comprises a first configured grant CG configuration periodicity, and a maximum transmission periodicity corresponding to the first CG configuration periodicity is longer than 640 milliseconds ms; and

sending the first information to a terminal device.

2. The method according to claim 1, wherein the terminal device is capable of supporting a CG-small data transmission SDT service.

3. The method according to claim 2, wherein a time-domain symbol position corresponding to the CG-SDT service is related to the first CG configuration periodicity and a system hyper frame number.

4. The method according to any one of claims 1 to 3, wherein the maximum transmission periodicity corresponding to the first CG configuration periodicity comprises any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

5. The method according to any one of claims 1 to 4, wherein the sending the first information to the terminal device comprises:
sending radio resource control RRC signaling, wherein the RRC signaling carries the first information, the first information further comprises a periodicity extension field, and the periodicity extension field comprises the first CG configuration periodicity.

6. The method according to any one of claims 1 to 5, further comprising:
sending second information to the terminal device, wherein the second information comprises a second CG configuration periodicity, and the second CG configuration periodicity is shorter than the first CG configuration periodicity.

7. The method according to claim 6, wherein the first CG configuration periodicity and the second CG configuration periodicity are carried in the RRC signaling, the RRC signaling comprises a periodicity field and a periodicity extension field, and the periodicity field comprises the second CG configuration periodicity.

8. The method according to claim 7, wherein the periodicity extension field is used by a first-type terminal device to determine a CG configuration periodicity, and the periodicity field is used by a second-type terminal device to determine a CG configuration periodicity.

9. The method according to any one of claims 1 to 8, wherein an association periodicity corresponding to the first CG configuration periodicity is 1, and at least one synchronization signal block SSB index in the association periodicity is mapped to a valid transmission occasion.

10. The method according to any one of claims 1 to 9, wherein the determining the first information comprises:
determining the first CG configuration periodicity based on load of the network device.

11. A resource configuration method, wherein the method is applied to a terminal device, and the method comprises:

receiving first information from a network device, wherein the first information comprises a first configured grant CG configuration periodicity, and a maximum transmission periodicity corresponding to the first CG configuration periodicity is longer than 640 milliseconds ms; and
sending a data packet to the network device based on the first information.

12. The method according to claim 11, wherein the sending the data packet to the network device based on the first information comprises:
sending a data packet of a CG-small data transmission SDT service to the network device based on the first information.

13. The method according to claim 12, wherein the sending the data packet of the CG-SDT service to the network device based on the first information comprises:

determining, based on the first CG configuration periodicity and a system hyper frame number, a time-domain symbol position corresponding to the data packet of the CG-SDT service; and
sending the data packet of the CG-SDT service to the network device based on the time-domain symbol position.

14. The method according to any one of claims 11 to 13, wherein the maximum transmission periodicity corresponding to the first CG configuration periodicity comprises any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

15. The method according to any one of claims 11 to 14, wherein the receiving the first information from the network device comprises:
receiving radio resource control RRC signaling, wherein the RRC signaling carries the first information, the first information further comprises a periodicity extension field, and the periodicity extension field comprises the first CG configuration periodicity.

16. The method according to any one of claims 11 to 15, further comprising:
receiving second information from the network device, wherein the second information comprises a second CG configuration periodicity, and the second CG configuration periodicity is shorter than the first CG configuration periodicity.

17. The method according to claim 16, wherein the first CG configuration periodicity and the second CG configuration periodicity are carried in the RRC signaling, the RRC signaling comprises a periodicity field and a periodicity extension field, and the periodicity field comprises the second CG configuration periodicity.

18. The method according to claim 17, wherein the periodicity extension field is used by a first-type terminal device to determine a CG configuration periodicity, and the periodicity field is used by a second-type terminal device to determine a CG configuration periodicity.

19. The method according to any one of claims 11 to 18, wherein an association periodicity corresponding to the first CG configuration periodicity is 1, and at least one synchronization signal block SSB index in the association periodicity is mapped to a valid transmission occasion.

20. The method according to any one of claims 11 to 19, wherein the first CG configuration periodicity is related to load of the network device.

21. A resource configuration apparatus, wherein the apparatus is used in a network device, and the apparatus comprises:

a processing module, configured to determine first information, wherein the first information comprises a first configured grant CG configuration periodicity, and a maximum transmission periodicity corresponding to the first CG configuration periodicity is longer than 640 milliseconds ms; and
a sending module, configured to send the first information to a terminal device.

22. The apparatus according to claim 21, wherein the terminal device is capable of supporting a CG-small data transmission SDT service.

23. The apparatus according to claim 22, wherein a time-domain symbol position corresponding to the CG-SDT service is related to the first CG configuration periodicity and a system hyper frame number.

24. The apparatus according to any one of claims 21 to 23, wherein the maximum transmission periodicity corresponding to the first CG configuration periodicity comprises any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

25. The apparatus according to any one of claims 21 to 24, wherein the sending module is specifically configured to:
send radio resource control RRC signaling, wherein the RRC signaling carries the first information, the first information further comprises a periodicity extension field, and the periodicity extension field comprises the first CG configuration periodicity.

26. The apparatus according to any one of claims 21 to 25, wherein the sending module is further configured to:
send second information to the terminal device, wherein the second information comprises a second CG configuration periodicity, and the second CG configuration periodicity is shorter than the first CG configuration periodicity.

27. The apparatus according to claim 26, wherein the first CG configuration periodicity and the second CG configuration periodicity are carried in the RRC signaling, the RRC signaling comprises a periodicity field and a periodicity extension field, and the periodicity field comprises the second CG configuration periodicity.

28. The apparatus according to claim 27, wherein the periodicity extension field is used by a first-type terminal device to determine a CG configuration periodicity, and the periodicity field is used by a second-type terminal device to determine a CG configuration periodicity.

29. The apparatus according to any one of claims 21 to 28, wherein an association periodicity corresponding to the first CG configuration periodicity is 1, and at least one synchronization signal block SSB index in the association periodicity is mapped to a valid transmission occasion.

30. The apparatus according to any one of claims 21 to 29, wherein the processing module is specifically configured to: determine the first CG configuration periodicity based on load of the network device.

31. A resource configuration apparatus, wherein the apparatus is used in a terminal device, and the apparatus comprises:

a receiving module, configured to receive first information from a network device, wherein the first information comprises a first configured grant CG configuration periodicity, and a maximum transmission periodicity corresponding to the first CG configuration periodicity is longer than 640 milliseconds ms; and
a sending module, configured to send a data packet to the network device based on the first information.

32. The apparatus according to claim 31, wherein the sending module is specifically configured to: send a data packet of a CG-small data transmission SDT service to the network device based on the first information.

33. The apparatus according to claim 32, wherein the sending module is specifically configured to:

determine, based on the first CG configuration periodicity and a system hyper frame number, a time-domain symbol position corresponding to the data packet of the CG-SDT service; and
send the data packet of the CG-SDT service to the network device based on the time-domain symbol position.

34. The apparatus according to any one of claims 31 to 33, wherein the maximum transmission periodicity corresponding to the first CG configuration periodicity comprises any one of 1280 ms, 2560 ms, 5120 ms, 10240 ms, 20480 ms, 40960 ms, 81920 ms, 163840 ms, 327680 ms, 655360 ms, 1310720 ms, 2621440 ms, and 5242880 ms.

35. The apparatus according to any one of claims 31 to 34, wherein the receiving module is specifically configured to: receive radio resource control RRC signaling, wherein the RRC signaling carries the first information, the first information further comprises a periodicity extension field, and the periodicity extension field comprises the first CG configuration periodicity.

36. The apparatus according to any one of claims 31 to 35, wherein the receiving module is further configured to: receive second information from the network device, wherein the second information comprises a second CG configuration periodicity, and the second CG configuration periodicity is shorter than the first CG configuration periodicity.

37. The apparatus according to claim 36, wherein the first CG configuration periodicity and the second CG configuration periodicity are carried in the RRC signaling, the RRC signaling comprises a periodicity field and a periodicity extension field, and the periodicity field comprises the second CG configuration periodicity.

38. The apparatus according to claim 37, wherein the periodicity extension field is used by a first-type terminal device to determine a CG configuration periodicity, and the periodicity field is used by a second-type terminal device to determine a CG configuration periodicity.

39. The apparatus according to any one of claims 31 to 38, wherein an association periodicity corresponding to the first CG configuration periodicity is 1, and at least one synchronization signal block SSB index in the association periodicity is mapped to a valid transmission occasion.

40. The apparatus according to any one of claims 31 to 39, wherein the first CG configuration periodicity is related to load of the network device.

41. A communication method, comprising:
receiving first information; and determining a first downlink channel bandwidth based on the first information, wherein the first information is information indicating whether a terminal device supports a capability of receiving a first downlink channel exceeding a first threshold bandwidth, and the first channel is a multicast physical downlink shared channel without a hybrid automatic repeat request feedback.

42. A communication method, comprising:

sending first information, wherein the first information indicates whether a terminal device supports receiving a first downlink channel exceeding a first threshold bandwidth capability, and the first downlink channel is a multicast physical downlink shared channel without a hybrid automatic repeat request feedback; and receiving the first downlink channel.

43. A communication apparatus, comprising a processor and a memory, wherein the processor is configured to execute instructions stored in the memory, to cause the communication apparatus to perform the method according to any one of claims 1 to 10, or to cause the communication apparatus to perform the method according to any one of claims 11 to 20, or to cause the communication apparatus to perform the method according to claim 41, or to cause the communication apparatus to perform the method according to claim 42.

44. A computer-readable storage medium, wherein the computer-readable storage medium stores a computer program or instructions, and when the computer program or the instructions are run on a computer,

the method according to any one of claims 1 to 10 is performed; or
the method according to any one of claims 11 to 20 is performed; or
the method according to claim 41 is performed; or
the method according to claim 42 is performed.

45. A computer program product, comprising instructions, wherein when the instructions are run on a computer,

the method according to any one of claims 1 to 10 is performed; or
the method according to any one of claims 11 to 20 is performed; or
the method according to claim 41 is performed; or
the method according to claim 42 is performed.

100

UE 1

UE 2

gNB

UE 3

UE 4

UE 5

UE 6

FIG. 1

| Network device | | Terminal device |
|---|---|---|

S210: Determine first information

S220: First information

S230: Data packet

FIG. 2

160 ms  160 ms  160 ms  160 ms

Time

FIG. 3

Resource configuration apparatus 400

Processing module 410 ——— Sending module 420

FIG. 4

Processor 504

Communication interface 508

Bus 502

Memory 506

Processing module 410  Sending module 420

Communication apparatus 500

FIG. 5

## INTERNATIONAL SEARCH REPORT

| International application No. |
|---|
| **PCT/CN2024/106438** |

### A. CLASSIFICATION OF SUBJECT MATTER

H04W 72/0446(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, ENTXT, 3GPP: 大于, 毫秒, 混合自动重传请求, 配置授权, 配置周期, 物理下行共享信道, 下行信道带宽, 周期, 组播物理下行共享信道, 阈值, configured grant, CG, grant-free, GF, ms, HARQ, SDT, periodicity, PDSCH, bandwidth, threshold, SSB, "640"

### C. DOCUMENTS CONSIDERED TO BE RELEVANT

| Category* | Citation of document, with indication, where appropriate, of the relevant passages | Relevant to claim No. |
|---|---|---|
| A | CN 115720375 A (HUAWEI TECHNOLOGIES CO., LTD.) 28 February 2023 (2023-02-28) description, paragraphs 2, 4, 16-17, 69-71, and 78-81 | 1-45 |
| A | CN 111478784 A (HUAWEI TECHNOLOGIES CO., LTD.) 31 July 2020 (2020-07-31) entire document | 1-45 |
| A | CN 115707110 A (HUAWEI TECHNOLOGIES CO., LTD.) 17 February 2023 (2023-02-17) entire document | 1-45 |
| A | US 2023103863 A1 (FG INNOVATION CO., LTD.) 06 April 2023 (2023-04-06) entire document | 1-45 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/106438**

| Patent document cited in search report | | | Publication date (day/month/year) | Patent family member(s) | | | Publication date (day/month/year) |
|---|---|---|---|---|---|---|---|
| CN | 115720375 | A | 28 February 2023 | WO | 2023024777 | A1 | 02 March 2023 |
| CN | 111478784 | A | 31 July 2020 | WO | 2020151678 | A1 | 30 July 2020 |
| | | | | BR | 112021014568 | A2 | 05 October 2021 |
| | | | | EP | 3917082 | A1 | 01 December 2021 |
| | | | | US | 2021352640 | A1 | 11 November 2021 |
| | | | | IN | 202147038103 | A | 03 September 2021 |
| | | | | CN | 114916077 | A | 16 August 2022 |
| | | | | RU | 2021124671 | A | 27 February 2023 |
| CN | 115707110 | A | 17 February 2023 | WO | 2023010951 | A1 | 09 February 2023 |
| | | | | EP | 4369822 | A1 | 15 May 2024 |
| | | | | US | 2024188071 | A1 | 06 June 2024 |
| US | 2023103863 | A1 | 06 April 2023 | EP | 4161200 | A1 | 05 April 2023 |
| | | | | CN | 115942383 | A | 07 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311018574